# EUROPÄISCHE PATENTSCHRIFT

(11) **EP 1 328 432 B1**
(45) Veröffentlichungstag und Bekanntmachung des Hinweises auf die Patenterteilung: **06.10.2004**
(21) Anmeldenummer: 01988680.3
(22) Anmeldetag: 23.10.2001
(51) Int. Cl.: B62D 1/04

(54) **LENKHILFE FÜR EINE LENKHANDHABE INSBESONDERE EINES KRAFTFAHRZEUGES**
STEERING BOOSTER FOR A STEERING SYSTEM, ESPECIALLY THE STEERING SYSTEM OF A MOTOR VEHICLE
DISPOSITIF D'ASSISTANCE DE DIRECTION POUR SYSTEME DE DIRECTION, EN PARTICULIER D'UN VEHICULE AUTOMOBILE

(30) Priorität: 23.10.2000 DE 10052537
(43) Veröffentlichungstag der Anmeldung: 23.07.2003
(73) Patentinhaber: Gerolimatos, Konstantinos, 71229 Leonberg (DE)
(72) Erfinder: Gerolimatos, Konstantinos, 71229 Leonberg (DE)
(74) Vertreter: Jakelski, Joachim, Dr.
(86) Internationale Anmeldenummer: PCT/DE2001/003973
(87) Internationale Veröffentlichungsnummer: WO 2002/034606

(56) Entgegenhaltungen:
- US-A- 2 573 475
- PATENT ABSTRACTS OF JAPAN vol. 1999, no. 13, 30. November 1999 (1999-11-30) -& JP 11 227614 A (ITAGAKI MITSUO), 24. August 1999 (1999-08-24)

## Beschreibung

Die vorliegende Erfindung betrifft eine Vorrichtung nach dem Oberbegriff des Anspruchs 1.

Es sind gattungsgemäße Lenkhilfen bekannt, bei denen ein als Griffteil ausgebildeter, drehbar gelagerter Knauf (Drehknauf) radial außen an einer Lenkhandhabe, z.B. einem Lenkrad, angeordnet ist, wie z.B. offenbart in US 2573475. Mittels dieses Drehknaufs lässt sich die Lenkhandhabe einhändig bewegen. Die Handhabung des Drehknaufs wird meist durch eine an dem Griffteil vorgesehene, besonders griffige Außenbeschichtung, z.B. eine Gummibeschichtung, erleichtert.

Die bekannten Lenkhilfen haben den Nachteil, dass die gelagerte Halterung des Drehknaufs im Gebrauch hohen Quer- bzw. Scherkräften ausgesetzt ist, was eine stetige Zunahme des Lagerspiels bewirkt und ein zeitweiliges Austauschen des Griffteils samt Lager erfordert. Darüber hinaus bedeutet das Griffteil ein erhebliches Verletzungsrisiko im Falle eines Auffahrunfalls.

Weiterhin ist bei bekannten Lenkhilfen nachteilig, dass eine Demontage des Drehknaufs, beispielsweise bei einem Defekt der Lager, praktisch nicht möglich ist. Es können daher abgenutzte oder defekte Drehknaufe nicht ohne weiteres ersetzt werden.

Der vorliegenden Erfindung liegt somit die Aufgabe zugrunde, eine eingangs genannte Lenkhilfe dahingehend weiterzuentwickeln, dass die vorgenannten Nachteile vermieden werden. Die Lenkhilfe soll einfach auswechselbar und zudem möglichst einfach und kostengünstig herstellbar sein.

Diese Aufgabe wird gelöst durch die Merkmale der unabhängigen Ansprüche. Vorteilhafte Weiterbildungen sind Gegenstand der Unteransprüche.

Aufgrund der Formgebung des Lenkhilfsteils ist gewährleistet, dass dieses nur gering aus der Lenkhandhabe herausragt und sich dadurch die genannte Verletzungsgefahr minimiert. Bevorzugt weist das Lenkhilfsteil eine Kugelkalotten-ähnliche Ausgestaltung der Oberfläche auf. Das Lenkhilfsteil passt sich ästhetisch in die äussere Form der Lenkhandhabe ein und ist nahezu unsichtbar. Ferner verhindert die flache Ausgestaltung wirksam, dass das Lenkhilfsteil im Gebrauch leicht aus der Lenkhandhabe herausgehebelt werden kann, obgleich es nur magnetisch gehaltert ist. Die magnetische Halterung ermöglicht ein einfaches und schnelles Austauschen des Lenkhilfsteils.

Die Vorrichtung eignet sich insbesondere als Einparkhilfe bei schwergängigen Fahrzeugen wie beispielsweise Lastkraftfahrzeugen.

In einer bevorzugten Ausführungsform ist die Magnethalterung mit einem Kugel- oder Walzlager kombiniert, um eine möglichst reibungsarme Drehbarkeit des Lenkhilfsteils an der Lenkhandhabe zu gestatten. Die Magnethalterung garantiert dabei, dass das Lager auch nach längerem Gebrauch keine Vergrößerung des erforderlichen Spiels erfährt, da eine etwa auftretende Spielerhöhung durch die Magnetkraft kompensiert wird, wobei sich lediglich der Abstand zwischen dem Lenkhilfsteil und dem Lagerteil verringert, jedoch die Funktion des Lagers weiterhin gewährleistet ist. Es ist anzumerken, dass die erfindungsgemäße Vorrichtung besonders vorteilhaft bei Fahrzeugen mit Servolenkung einsetzbar ist, da hier der an dem Lenkhilfsteil anliegende Handballen des Fahrers bereits mit geringem Kraftaufwand eine merkliche Drehung der Lenkhandhabe bewirken kann. Ferner ist anzumerken, dass die Erfindung, neben ihrer bevorzugten Verwendung in Lastkraftfahrzeugen, auch in Personenkraftfahrzeugen, Wasserfahrzeugen, Luftfahrzeugen oder dergleichen vorteilhaft Verwendung finden kann.

Die Erfindung wird nachfolgend anhand eines in den Zeichnungen dargestellten Ausführungsbeispiels näher erläutert.

Im Einzelnen zeigen
- Fig. 1: eine perspektivische Ansicht eines eine erfindungsgemäße Lenkhilfe (Drehknauf) aufweisenden Kraftfahrzeuglenkrades; und
- Fig. 2: eine seitliche Schnittansicht einer erfindungsgemäßen Lenkhilfe im Einbauzustand.

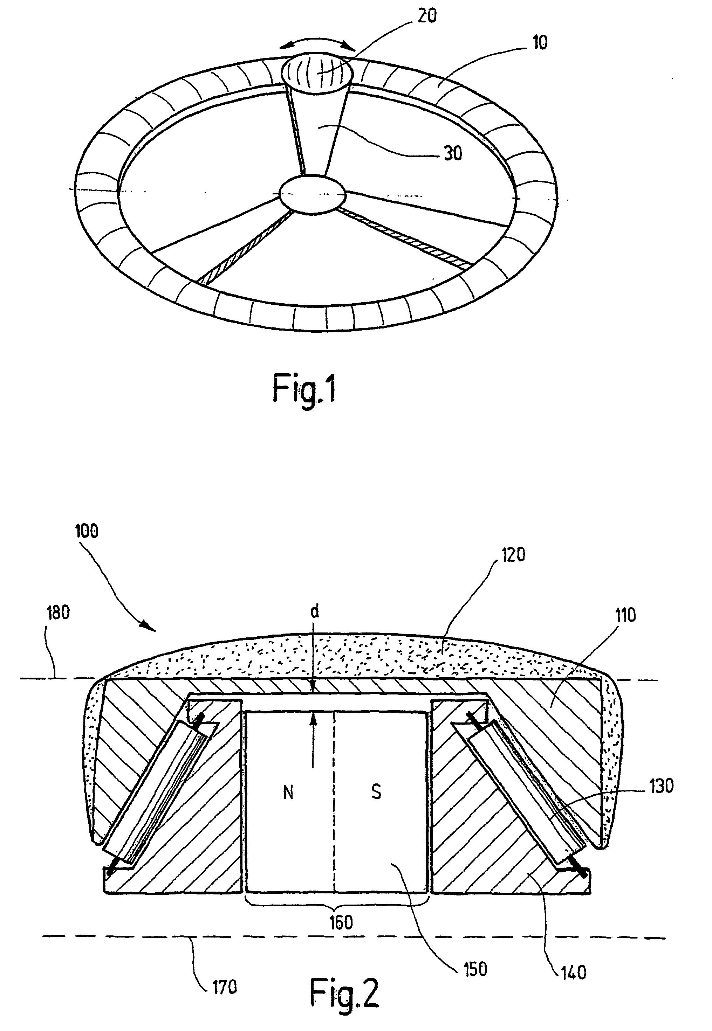

Die in Fig. 1 gezeigte Lenkhandhabe weist eine an der Oberseite eines Lenkrads 10 angeordnete Lenkhilfe 20 auf. Aus Stabilitätsgründen ist die Lenkhilfe 20 in Höhe einer Lenkradspeiche 30 angeordnet. Es versteht sich, dass die Lenkhilfe 20 an jedem beliebigen Ort auf dem Lenkrad 10 oder sogar an einer der Speichen 30 angeordnet sein kann.

Die in Fig. 2 gezeigte Lenkhilfe 100 weist ein Lenkhilfsteil (Drehknauf) 110, 120 auf, welches aus einem aus einem magnetisierbaren Werkstoff hergestellten ersten Flanschteil 110 und einer an der Oberfläche des ersten Flanschteils 110 aufgebrachten Gummibeschichtung 120 gebildet ist. Das erste Flanschteil 110 greift in ein aus kreisförmig und gekippt angeordneten Walzen 130 gebildetes Walzlager ein. Die Walzen 130 sind an einem zweiten Flanschteil 140 drehbar gehaltert. Ein senkrecht zur Papierebene kreisförmig ausgebildeter Magnet 150 greift in eine Durchgangsöffnung 160 des zweiten Flanschteils ein und ist dort eingeklebt, eingepresst oder in ähnlicher Weise befestigt.

Eine besonders vorteilhafte Befestigung sieht vor, dass der Magnet 150 oder ein den Magneten haltendes Teil in eine komplementär zu dem Magneten ausgebildete Aufnahme, die fest in das Lenkrad 10 eingepasst ist, eingreift und beispielsweise mittels einer Madenschraube, die das Lenkrad 10 radial durchdringt, befestigt wird. Es versteht sich, dass in diesem Falle der Magnet 150 oder das den Magneten haltende Teil nicht - wie in Fig. 2 gezeigt - bündig mit dem zweiten Flansch 140 abschließt, sondern über dieses axial hinausragt, so dass es in die (nicht gezeigte) Aufnahme in dem Lenkrad 10 eingreifen kann. Diese Art der Befestigung erlaubt die komplette Demontage der Lenkhilfe 100.

Der im Einbauzustand sich bildende Abstand d zwischen der Oberkante des Magneten 150 und der Unterkante des ersten Flanschteils 110 ist bevorzugt kleiner als 0,5 mm. Dieser Abstand stellt sicher, dass ein etwa auftretendes Spiel zwischen dem Walzlager 130 und dem ersten Flanschteil 110 durch die magnetischen Anziehungskräfte weitestgehend ausgeglichen wird. Die gestrichelten Linien 170, 180 deuten die äußeren Abmessungen des in Fig. 1 gezeigten Lenkrads 10 im Einbauzustand an. Demnach ragt lediglich die Gummibeschichtung 120 der Lenkhilfe bzw. des ersten Flanschteils 110 über die Lenkradoberfläche hinaus. Es ist anzumerken, dass das Lenkhilfsteil in der einfachsten Ausführungsform ohne Verwendung eines Lagers unmittelbar an der Lenkhandhabe magnetisch gehaltert und dabei beispielsweise in einer Nutvertiefung oder dergleichen geführt ist.

## Patentansprüche

1. Vorrichtung zur Lenkhilfe für eine um eine Drehachse drehbare Lenkhandhabe insbesondere eines Kraftfahrzeugs, mit einem bezüglich der Drehachse radial außen drehbar angeordneten Lenkhilfsteil (20, 110, 120) wobei das Lenkhilfsteil senkrecht zur Drehachse im Wesentlichen flach ausgebildet ist, **dadurch gekennzeichnet, dass** das Lenkhilfsteil an der Lenkhandhabe magnetisch (150) gehaltert (130) ist.

2. Vorrichtung nach Anspruch 1, **gekennzeichnet durch** ein an der Lenkhandhabe fest angeordnetes Lagerteil (130, 140), an dem das Lenkhilfsteil (20, 110, 120) magnetisch gehaltert ist.

3. Vorrichtung nach Anspruch 2, **dadurch gekennzeichnet, dass** das Lagerteil als Walzlager ausgebildet ist.

4. Vorrichtung nach Anspruch 3, **dadurch gekennzeichnet, dass** das Walzlager durch ringförmig angeordnete Walzen (130) gebildet ist, die auf der dem Lenkhilfsteil (20, 110, 120) zugewandten Seite nach innen fluchten, wobei das Lenkhilfsteil auf die Walzen formschlüssig aufsetzbar ist.

5. Vorrichtung nach einem der vorhergehenden Ansprüche, **dadurch gekennzeichnet, dass** ein Magnet (150) zentrisch in das Lagerteil (130, 140) eingreift.

6. Vorrichtung nach Anspruch 5, **dadurch gekennzeichnet, dass** der Magnet (150) oder ein den Magneten (150) tragendes Teil im Wesentlichen senkrecht zur Drehachse formschlüssig in einer in der Lenkhandhabe befestigten komplementär zu dem Magneten (150) oder dem den Magneten (150) tragenden Teil ausgebildeten Aufnahme lösbar befestigbar ist.

7. Vorrichtung nach Anspruch 6, **dadurch gekennzeichnet, dass** der Magnet (150) oder ein den Magneten tragendes Teil ein Zylinder ist, der in die als Kreisring ausgebildete Aufnahme eingreift und mittels eines stiftförmigen, insbesondere als Schraube ausgebildeten, Befestigungselements, welches die Lenkhandhabe im wesentlichen radial durchdringt, lösbar befestigbar ist.

8. Vorrichtung nach einem der Ansprüche 5 bis 7, **dadurch gekennzeichnet, dass** die Außenabmessungen des Magneten (150) an die Innenabmessungen einer Durchgangsöffnung (160) des Lagerteils (130, 140) angepasst sind und dass der Magnet mit dem Lagerteil mittels einer Klebeverbindung oder durch Pressung oder dergleichen fest verbunden ist.

9. Vorrichtung nach einem der vorhergehenden Ansprüche, **dadurch gekennzeichnet, dass** der lichte Abstand (d) zwischen Magnet und Unterkante des Lenkhilfsteils kleiner als 1 mm, bevorzugt kleiner als 0,5 mm, ist.

10. Vorrichtung nach einem der vorhergehenden Ansprüche, **dadurch gekennzeichnet, dass** die äussere Oberfläche des Lenkhilfsteils kalottenförmig, insbesondere kugelkalottenförmig, ausgebildet ist.

11. Vorrichtung nach einem der vorhergehenden Ansprüche, **dadurch gekennzeichnet, dass** das Lenkhilfsteil als Drehknauf ausgebildet ist.

12. Lenkhandhabe insbesondere eines Kraftfahrzeugs aufweisend eine Vorrichtung nach einem der vorhergehenden Ansprüche.

## Claims

1. A device acting as a steering booster for a steering member, rotatable about an axis of rotation, in particular of a motor vehicle, comprising a steering-booster element (20, 110, 120) which is rotatably arranged radially outwards with respect to the axis of rotation, the steering-booster element being substantially flat perpendicular to the axis of rotation, **characterized in that** the steering-booster element is held (130) on the steering member magnetically (150).

2. A device according to Claim 1, **characterized by** a bearing member (130, 140) which is mounted on the steering member in a fixed manner and on which the steering-booster element (20, 110, 120) is held magnetically.

3. A device according to Claim 2, **characterized in that** the bearing member is constructed in the form of a roller bearing.

4. A device according to Claim 3, **characterized in that** the roller bearing is formed by rollers (130), which are arranged in an annular manner and which are aligned inwards on the side facing the steering-booster element (20, 110, 120), the steering-booster element being mountable on the rollers in a form-fitting manner.

5. A device according to one of the preceding Claims, **characterized in that** a magnet (150) engages centrally in the bearing member (130, 140).

6. A device according to Claim 5, **characterized in that** the magnet (150) or an element carrying the magnet (150) is capable of being fastened in a detachable manner, substantially perpendicular to the axis of rotation and in a form-fitting manner, in a receiving element fastened in the steering member and designed to be complementary to the magnet (150) or to the element carrying the magnet (150).

7. A device according to Claim 6, **characterized in that** the magnet (150), or an element carrying the magnet, is a cylinder which engages in the receiving element designed in the form of a circular ring and which is capable of being fastened in a detachable manner by means of a pin-shaped fastening element, in particular designed in the form of a screw, which passes through the steering member substantially radially.

8. A device according to one of Claims 5 to 7, **characterized in that** the outer dimensions of the magnet (15) are adapted to the inner dimensions of a through-opening (160) of the bearing member (130, 140), and the magnet is connected to the bearing member in a fixed manner by means of an adhesive join or by pressing or the like.

9. A device according to one of the preceding Claims, **characterized in that** the clear distance (d) between the magnet and the lower edge of the steering-booster element is smaller than 1 mm, and preferably smaller than 0·5 mm.

10. A device according to one of the preceding Claims, **characterized in that** the outer surface of the steering-booster element is constructed in the form of a cup, in particular in the form of a spherical cup.

11. A device according to one of the preceding Claims, **characterized in that** the steering-booster element is constructed in the form of a rotary knob.

12. A steering member, in particular a steering member of a motor vehicle, having a device according to one of the preceding Claims.

## Revendications

1. Dispositif d'assistance hydraulique d'un volant de direction, notamment d'un véhicule automobile, pouvant pivoter autour d'un axe de rotation, avec une pièce d'assistance directionnelle (20, 110, 120) tournante montée radialement à l'extérieur de l'axe de pivotement, la pièce d'aide directionnelle étant conçue essentiellement de manière plane à la verticale par rapport à l'axe de rotation,
**caractérisé en ce que**
la pièce d'assistance directionnelle est fixée (130) de manière magnétique (150) sur le volant de direction.

2. Dispositif selon la revendication 1,
**caractérisé par**
un palier (130, 140) fixe sur le volant de direction et sur lequel est fixée la pièce d'assistance directionnelle (20, 110, 120) de manière magnétique.

3. Dispositif selon la revendication 2,
**caractérisé en ce que**
le palier est un palier à roulement.

4. Dispositif selon la revendication 3,
**caractérisé en ce que**
le palier à roulement est formé par des rouleaux (130) montés en anneau et alignés vers l'intérieur sur le côté tourné vers la pièce d'assistance directionnelle (20, 110, 120) qui peut être posée par complémentarité de forme sur les rouleaux.

5. Dispositif selon l'une quelconque des revendications précédentes,
**caractérisé en ce qu'**
un aimant (150) est en prise au centre dans le palier (130, 140).

6. Dispositif selon la revendication 5,
**caractérisé en ce que**
l'aimant (150) ou une pièce supportant l'aimant (150) peut être fixé essentiellement à la verticale de l'axe de rotation et de manière amovible par complémentarité de forme dans un logement formé et fixé dans le volant de direction en complément de l'aimant (150) ou de la pièce supportant les aimants (150).

7. Dispositif selon la revendication 6,
**caractérisé en ce que**
l'aimant (150) ou une pièce supportant l'aimant est un cylindre qui, en prise dans le logement conçu en forme d'anneau circulaire, peut être fixé de manière amovible à l'aide d'un élément de fixation en forme de broche, notamment une vis, qui traverse essentiellement radialement le volant de direction.

8. Dispositif selon l'une quelconque des revendications 5 à 7,
**caractérisé en ce que**
les cotes extérieures de l'aimant (150) sont adaptées aux cotes intérieures d'un diamètre intérieur (160) du palier (130, 140), et l'aimant est fixé au palier par collage ou par pressage ou autre procédé analogue.

9. Dispositif selon l'une quelconque des revendications précédentes,
**caractérisé en ce que**
l'écartement (d) entre l'aimant et l'arête inférieure de la pièce d'assistance directionnelle est inférieur à 1 mm, de préférence à 0,5 mm.

10. Dispositif selon l'une quelconque des revendications précédentes,
**caractérisé en ce que**
la surface extérieure de la pièce d'assistance directionnelle est une calotte, notamment une calotte sphérique.

11. Dispositif selon l'une quelconque des revendications précédentes,
**caractérisé en ce que**
la pièce d'assistance directionnelle est un bouton tournant.

12. Volant de direction, notamment d'un véhicule automobile, comportant un dispositif selon l'une quelconque des revendications précédentes.
